# EUROPÄISCHE PATENTSCHRIFT

(11) **EP 4 282 021 B1**
(45) Veröffentlichungstag und Bekanntmachung des Hinweises auf die Patenterteilung: **11.12.2024**
(21) Anmeldenummer: 22702631.7
(22) Anmeldetag: 19.01.2022
(51) Int. Cl.: H01M 10/48, B60L 3/00, B60L 50/64, H01M 50/231, H01M 50/242, H01M 50/249

(54) **UNTERBODENELEMENT FÜR EINE TRAKTIONSBATTERIE EINES KRAFTFAHRZEUGS, KRAFT-FAHRZEUG MIT EINEM UNTERBODENELEMENT UND VERFAHREN ZUR FESTSTELLUNG EINER INTRUSION EINER TRAKTIONSBATTERIE EINES KRAFTFAHRZEUGS**
UNDERTRAY ELEMENT FOR A TRACTION BATTERY OF A MOTOR VEHICLE, MOTOR VEHICLE HAVING AN UNDERTRAY ELEMENT, AND METHOD FOR DETERMINING AN INTRUSION OF A TRACTION BATTERY OF A MOTOR VEHICLE
ÉLÉMENT DE DESSOUS DE CAISSE POUR UNE BATTERIE DE TRACTION D'UN VÉHICULE AUTOMOBILE, VÉHICULE AUTOMOBILE ÉQUIPÉ D'UN ÉLÉMENT DE DESSOUS DE CAISSE ET PROCÉDÉ DE DÉTERMINATION DE L'INTRUSION DANS UNE BATTERIE DE TRACTION D'UN VÉHICULE AUTOMOBILE

(30) Priorität: 25.01.2021 DE 102021101500
(43) Veröffentlichungstag der Anmeldung: 29.11.2023
(73) Patentinhaber: Audi AG, 85045 Ingolstadt (DE); Dr. Ing. h.c. F. Porsche AG, 70435 Stuttgart (DE)
(72) Erfinder: BRANDIC, Ilija, 74385 Pleidelsheim (DE); GRUPP, Markus, 75399 Unterreichenbach (DE); RAUSCH, Julius, 74076 Heilbronn (DE); STOLL, Oliver, 69429 Waldbrunn (DE)
(74) Vertreter: Hofstetter, Schurack & Partner
(86) Internationale Anmeldenummer: PCT/EP2022/051054
(87) Internationale Veröffentlichungsnummer: WO 2022/157162

(56) Entgegenhaltungen:
- EP-A1- 3 578 410
- DE-A1- 102010 013 017
- DE-A1- 102017 206 663
- DE-A1- 102018 129 158
- DE-A1- 102019 207 435

## Beschreibung

Die Erfindung betrifft ein Unterbodenelement für eine Traktionsbatterie eines Kraftfahrzeugs, das zumindest eine Sensorvorrichtung umfasst, ein Kraftfahrzeug mit einem solchen Unterbodenelement sowie ein Verfahren zur Feststellung einer Intrusion einer Traktionsbatterie eines Kraftfahrzeugs.

Heutzutage werden viele Kraftfahrzeuge teil- oder vollelektrisch ausgebildet, beispielsweise als Hybridfahrzeug oder als rein elektrisch betriebenes Kraftfahrzeug. Eine dafür benötigte Antriebsbatterie beziehungsweise Traktionsbatterie, die üblicherweise mehrere Batteriezellen umfasst, ist dabei meistens in einem Bodenbereich des Kraftfahrzeugs angeordnet. Das hat den Nachteil, dass Stöße von unten direkt auf die Traktionsbatterie treffen, was zu Schäden an der Traktionsbatterie führen kann. Um Schäden durch eine Intrusion von unterhalb zu begrenzen oder zu vermeiden, ist es bekannt ein Unterbodenelement für die Traktionsbatterie zu verwenden, das beispielsweise als Unterfahrschutz ausgebildet sein kann, um die Traktionsbatterie vor einer direkten Krafteinwirkung zu schützen. Dabei kann das Unterbodenelement eine Verkleidung am Unterboden der Traktionsbatterie und/oder des Kraftfahrzeugs sein, die die Traktionsbatterie vor Umwelteinflüssen und/oder mechanischen Einflüssen abschirmt.

Jedoch hält auch ein Unterbodenelement nicht alle Stöße von der Traktionsbatterie fern und es kann bei starken Stößen von unterhalb, beispielsweise bei einem Aufsetzen des Kraftfahrzeugs bei einer Pollerüberfahrt, dazu kommen, dass das Unterbodenelement in die Traktionsbatterie gedrückt wird und hierdurch Schäden an der Traktionsbatterie entstehen. Das heißt, es kann zu einer Intrusion der Traktionsbatterie kommen. Damit diese Art von Schaden festgestellt werden kann und Folgeschäden am Kraftfahrzeug und/oder Gefahren für einen Fahrer des Kraftfahrzeugs minimiert werden können, ist eine Detektion dieser Ereignisse notwendig, um Rückschlüsse zu ziehen, ob Batteriezellen der Traktionsbatterie eine Intrusion erfahren haben. Das heißt, es wird ein Sensierungskonzept benötigt, um ein physikalisches Eindringen beziehungsweise ein Verformen der Traktionsbatterie feststellen zu können.

Aus der EP 1 168 463 A1 ist ein Faserverbundwerkstoff mit darin integriertem piezoelektrischen Sensor oder Aktor bekannt. Hierbei sind die elektrischen Zuleitungen für den Aktor oder Sensor in Form elektrisch isolierter, dünner Drähte ausgebildet, die senkrecht zu den Laminatlagen aus dem Faserverbundwerkstoff herausgeführt sind, wobei die Fasern durch das Herausführen der Zuleitungen nicht durchtrennt, sondern auseinandergeschoben werden.

Der Erfindung liegt die Aufgabe zugrunde, Schäden an einer Traktionsbatterie, die von unterhalb des Kraftfahrzeugs stammen, festzustellen.

Diese Aufgabe wird durch die unabhängigen Patentansprüche gelöst. Vorteilhafte Weiterbildungen der Erfindung sind in den abhängigen Patentansprüchen, der folgenden Beschreibung sowie den Figuren offenbart.

Durch die Erfindung ist ein Unterbodenelement für eine Traktionsbatterie eines Kraftfahrzeugs, umfassend zumindest eine Sensorvorrichtung, bereitgestellt. Mit Unterbodenelement ist hierbei eine Bodenverkleidung, insbesondere ein Unterfahrschutz, gemeint, die in einer bestimmungsgemäßen Einbaulage im Kraftfahrzeug in Richtung einer Unterseite des Kraftfahrzeugs und/oder der Traktionsbatterie angeordnet ist und die zumindest eine Schutzwirkung vor äußeren Einflüssen bereitstellt. Erfindungsgemäß weist das Unterbodenelement zumindest eine Sensorvorrichtung auf, wobei die Sensorvorrichtung zumindest einen elektrisch leitfähigen Sensordraht aufweist, der in ein flächiges Textilmaterial integriert ist, wobei die Sensorvorrichtung dazu ausgebildet ist, eine am Sensordraht anliegende Spannung zu messen und in Abhängigkeit einer gemessenen Änderung der Spannung eine Verformung des Sensordrahts festzustellen.

Mit anderen Worten ist zumindest ein elektrisch leitfähiger Sensordraht in ein flächiges Textilmaterial integriert. Beispielsweise kann das Drahtmaterial auf ein flächiges textiles Halbzeug aufgebracht sein. Das Textilmaterial kann hierbei als Trägerstruktur dienen, die eine Anbringung des Sensordrahts an dem Unterbodenelement erleichtern kann. Somit kann beispielsweise das Textilmaterial flächig an dem Unterbodenelement angebracht werden, sodass der Sensordraht gleichmäßig auf dem Unterbodenelement verteilt ist und ein Großteil des Unterbodenelements abdeckt. Das Textilmaterial kann beispielsweise als Faserverbundwerkstoff ausgebildet sein, wodurch eine Steigerung der Festigkeit erreicht werden kann. Der Sensordraht, der beispielsweise aus einem Metall ausgebildet sein kann, kann während eines Betriebs mit einem Strom bei einer vorgegebenen Spannung durchflossen werden, wobei eine Verformung des Sensordrahts zu einer Änderung der Spannung führt und somit bei einer festgestellten Änderung die Verformung des Unterbodenelements und folglich eine Intrusion auf eine Traktionsbatterie des Kraftfahrzeugs festgestellt werden kann. Durch die Erfindung ergibt sich der Vorteil, dass auf einfache Art und Weise eine Verformung, insbesondere eine Verformung des Unterbodenelements, festgestellt werden kann, wobei durch die Verformung des Unterbodenelements auf eine Beschädigung der Traktionsbatterie zurückgeschlossen werden kann.

Die Erfindung umfasst auch Ausführungsformen, durch die sich zusätzliche Vorteile ergeben.

Eine Ausführungsform sieht vor, dass der Sensordraht mäanderförmig in dem flächigen Textilmaterial integriert ist. Mit anderen Worten kann der Sensordraht schlingenförmig über eine vorgegebene Breite des Textilmaterials verlaufen. Hierdurch ergibt sich der Vorteil, dass der Sensordraht einen gro-ßen Bereich des Textilmaterials unter Einsparung von Material des Sensordrahtes abdeckt und somit eine verbesserte Sensierung von Verformungen bereitgestellt werden kann.

Vorzugsweise ist vorgesehen, dass der Sensordraht aus einer Karbonfaser oder einem mit Metall beschichteten Kunststofffilament ausgebildet ist. Mit anderen Worten kann der Sensordraht als Karbonfaser beziehungsweise Kohlenstofffaser ausgebildet sein, die in das flächige Textilmaterial eingearbeitet ist. Der Vorteil von Karbon ist eine sehr gute elektrische Leitfähigkeit und gleichzeitig eine verbesserte Möglichkeit, den Sensordraht in das Textilmaterial einzubinden. Außerdem kann mittels der Karbonfaser eine Struktur des Unterbodenelements verstärkt werden. Insbesondere kann Karbon als Faserverbundwerkstoff verarbeitet werden. Alternativ kann der Sensordraht als ein Kunststofffilament ausgebildet sein, das mit einem Metall beschichtet ist. Der Vorteil eines Kunststofffilaments ist es, dass dieser besonders leicht in das Textilmaterial eingearbeitet werden kann, was eine Herstellung erleichtert und Kosten einspart. Die Leitfähigkeit des Sensordrahtes wird dabei durch die Beschichtung mit Metall bereitgestellt. In einer weiteren Alternative kann der Sensordraht aus einem Metall ausgebildet sein, insbesondere Kupfer, der kostengünstig in das Textilmaterial eingearbeitet werden kann.

Eine weitere Ausführungsform sieht vor, dass der Sensordraht dazu ausgebildet ist, bei einer Verformung einen elektrischen Widerstand zu ändern. Das heißt, dass die Änderung der Spannung und damit die Verformung des Sensordrahts festgestellt werden, indem der Sensordraht seinen elektrischen Widerstand ändert. Verformt sich das Unterbodenelement, verändern sich die Länge und/oder der Durchmesser des Sensordrahts, was zu einer messbaren Widerstandsänderung führt. Vorzugsweise kann der Sensordraht daher aus geeigneten Materialien, insbesondere Karbon, bereitgestellt sein, der eine Länge und Dicke des Sensordrahts bei Verformung ändert. Alternativ kann der Sensordraht bei einer zu starken Verformung auch brechen, wobei hier die Änderung der Spannung festgestellt werden kann, falls kein Strom mehr durch den Sensordraht durchfließt.

Eine weitere Ausführungsform sieht vor, dass die Sensorvorrichtung dazu ausgebildet ist, ein Warnsignal zu erzeugen, falls die gemessene Änderung der Spannung über einem vorgegebenen Spannungsschwellenwert liegt. Mit anderen Worten kann die Sensorvorrichtung bestimmen, wie groß die Änderung der Spannung ist. Liegt die Änderung über einem vorgegebenen Spannungsschwellenwert, kann ein Warnsignal erzeugt werden. Das Warnsignal kann vorzugsweise dazu verwendet werden, einen Fahrer des Kraftfahrzeugs zu warnen. Beispielsweise kann das Warnsignal als Steuersignal für eine Kontrollleuchte dienen, die dem Fahrer des Kraftfahrzeugs eine Beschädigung der Traktionsbatterie anzeigen kann. Auch kann die Sensorvorrichtung eine Elektronik beziehungsweise Auswerteeinheit aufweisen, die die Spannung misst und auswertet, wobei in Abhängigkeit der gemessenen Änderung der Spannung auch mehrere Spannungsschwellenwerte bereitgestellt sein können, die unterschiedliche Schweregrade von Intrusionen auf die Traktionsbatterie des Kraftfahrzeugs anzeigen können. Insbesondere kann die Änderung der Spannung abhängig von der Verformung des Sensordrahts sein, wodurch das Warnsignal in Abhängigkeit der Änderung der Spannung bereitgestellt werden kann. Durch diese Ausführungsform ergibt sich der Vorteil, dass eine Beschädigung der Traktionsbatterie und/oder eine Verformung des Sensordrahts erst ab einer gewissen Schwelle als solche erkannt wird und leichtere Stöße, die zu keiner Schädigung führen, als Fehldetektion vermieden werden können.

Eine Ausführungsform sieht vor, dass das flächige Textilmaterial mit dem Sensordraht bei einem bestimmungsgemäßen Einbau des Unterbodenelements an einer Oberfläche des Unterbodenelements in Richtung des Kraftfahrzeugs angeordnet ist. Insbesondere kann das flächige Textilmaterial auf die Oberfläche des Unterbodenelements geklebt sein. Zur Verklebung des Textilmaterials mit der Oberfläche des Unterbodenelements kann das Textilmaterial beziehungsweise textile Halbzeug vorher mit Harz injiziert werden und so als dünne Platte auf die Oberfläche angebracht werden. Hierdurch ergibt sich eine bevorzugte Anbringungsform der Sensorvorrichtung an das Unterbodenelement.

Eine weitere Ausführungsform sieht vor, dass das Unterbodenelement einen Schaumeinleger als biegesteife Zwischenschicht zwischen zumindest zwei Deckschichten aufweist, wobei das flächige Textilmaterial mit dem Sensordraht zwischen den Schaumeinleger und einer der beiden Deckschichten angeordnet ist. Mit anderen Worten kann ein anderer Aufbau des Unterbodenelements vorsehen, dass das Textilmaterial zwischen einer von zwei Deckschichten und einer Zwischenschicht, die als Schaumeinleger ausgebildet ist, angeordnet wird. Somit kann das Textilmaterial beziehungsweise textile Halbzeug direkt in den Fertigungsprozess des Unterbodenelements integriert werden. Die Deckschichten können vorzugsweise aus einem Glasfasergewebe ausgebildet sein, wodurch eine zusätzliche Schutzwirkung bereitgestellt werden kann. Durch diese Ausführungsform kann eine weitere bevorzugte Anbringungsform der Sensorvorrichtung in das Unterbodenelement bereitgestellt werden.

In einer weiteren Ausführungsform ist vorgesehen, dass das Unterbodenelement einen Schaumeinleger als biegesteife Zwischenschicht zwischen zumindest zwei Deckschichten aufweist, wobei das flächige Textilmaterial mit dem Sensordraht in dem Schaumeinleger integriert ist. Mit anderen Worten kann das Unterbodenelement in ähnlicher Weise wie bei der zuvor genannten Ausführungsform ausgebildet sein, also mit zwei Deckschichten, die einen Schaumeinleger dazwischen einschließen, wobei das Textilmaterial mit dem Sensordraht in den Schaumeinleger eingeschäumt sein kann. Beispielsweise kann bei einem Produktionsprozess das Textilmaterial so umschäumt werden, dass es in die biegesteife Zwischenschicht integriert ist. Durch diese Ausführungsform kann eine weitere bevorzugte Anbringungsform der Sensorvorrichtung in das Unterbodenelement bereitgestellt werden.

Bei der zuvor genannten Ausführungsform ist vorzugsweise vorgesehen, dass ein jeweiliges Ende des Sensordrahtes mit einer in den Schaumeinleger integrierten Steckereinheit verbunden ist, wobei die Steckereinheit über eine freigestellte Öffnung durch zumindest eine der Deckschichten und der Zwischenschicht mittels eines Steckers zu einer Auswerteeinheit der Sensorvorrichtung koppelbar ist. Mit anderen Worten kann, falls das Textilmaterial mit dem Sensordraht in den Schaumeinleger integriert ist, zusätzlich eine Steckereinheit in dem Schaumeinleger vorgesehen sein, die beispielsweise auch in einem Fertigungsprozess zusammen mit dem Textilmaterial eingeschäumt sein kann. Der Sensordraht in dem Textilmaterial kann vorzugsweise mit dieser Steckereinheit verbunden sein, beispielsweise direkt oder über ein Metallplättchen, was insbesondere eine verbesserte Fertigungstoleranz bereitstellt. Die Steckereinheit kann dann nach einem Fertigungsprozess durch eine vorgegebene Positionierung nachträglich freigestellt werden, zum Beispiel durch Bohren, um einen Zugang zur Steckereinheit zu erhalten. Anschließend kann ein Stecker verwendet werden, um die Steckereinheit und somit den Sensordraht mit einer Auswerteeinheit der Sensorvorrichtung zu koppeln. Hierdurch kann eine kostengünstige, einfache und reproduzierbare Kontaktierung der jeweiligen Enden des Sensordrahtes bereitgestellt werden, um Signale der Spannung abzugreifen und folglich eine Verformung des Unterbodenelements zu detektieren.

Ein weiterer Aspekt der Erfindung betrifft ein Kraftfahrzeug mit einem Unterbodenelement nach einem der vorhergehenden Ausführungsformen. Das erfindungsgemäße Kraftfahrzeug ist bevorzugt als Kraftwagen, insbesondere als Personenkraftwagen oder Lastkraftwagen, oder als Personenbus oder Motorrad ausgestaltet. Vorzugsweise kann das Kraftfahrzeug als elektrisch betriebenes Kraftfahrzeug mit zumindest einer Traktionsbatterie ausgebildet sein.

In einer Ausführungsform des Kraftfahrzeugs ist vorgesehen, dass das Kraftfahrzeug eine Traktionsbatterie aufweist und das Unterbodenelement mehrere Kammern zur Anordnung von Batteriezellen der Traktionsbatterie umfasst, wobei das Textilmaterial mit dem Sensordraht flächig in den Bereichen der Kammern auf oder in das Unterbodenelement angeordnet ist. Mit anderen Worten kann das Unterbodenelement Aussparungen aufweisen, in denen Batteriezellen der Traktionsbatterie angeordnet werden können. In diese Kammern, die vorzugsweise flächige Bereiche in dem Unterbodenelement darstellen, kann das Textilmaterial mit dem Sensordraht angeordnet werden. Somit ergeben sich Sensorflächen auf Höhe der Batteriezellen, wobei jede der Kammern somit einen eigenen Sensordraht aufweisen kann, wodurch bei einer Verformung verbessert festgestellt werden kann, welche Kammer verformt wurde. Durch diese Ausführungsform ergibt sich der Vorteil, dass eine Verformung und damit eine Beschädigung einer der Batteriezellen verbessert lokalisiert werden kann.

Erfindungsgemäß ist auch ein Verfahren zur Feststellung einer Intrusion einer Traktionsbatterie eines Kraftfahrzeugs bereitgestellt, mit einem Unterbodenelement nach einem der vorhergehenden Ausführungsformen. Das Verfahren sieht vor, dass durch eine Sensorvorrichtung des Unterbodenelements, die zumindest einen elektrisch leitfähigen Sensordraht aufweist, der in ein flächiges Textilmaterial integriert ist, eine am Sensordraht anliegende Spannung gemessen wird und in Abhängigkeit einer gemessenen Änderung der Spannung eine Verformung des Sensordrahts und damit eine Intrusion der Traktionsbatterie festgestellt wird. Hierbei ergeben sich gleiche Vorteile und Variationsmöglichkeiten wie bei dem Unterbodenelement und/oder wie bei dem Kraftfahrzeug mit dem Unterbodenelement.

Zu der Erfindung gehört auch die Steuervorrichtung für das Kraftfahrzeug. Die Steuervorrichtung kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Unterbodenelements beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: ein schematisch dargestelltes Kraftfahrzeug mit einem Unterbodenelement gemäß einer beispielhaften Ausführungsform;
- Fig. 2: ein schematisch dargestelltes Unterbodenelement mit einer Sensorvorrichtung gemäß einer beispielhaften Ausführungsform;
- Fig. 3: ein schematisch dargestellter Applikationsort eines Textilmaterials mit einem Sensordraht, gemäß einer ersten beispielhaften Ausführungsform;
- Fig. 4: ein schematisch dargestellter Applikationsort eines Textilmaterials mit einem Sensordraht, gemäß einer zweiten beispielhaften Ausführungsform;
- Fig. 5: ein schematisch dargestellter Applikationsort eines Textilmaterials mit einem Sensordraht, gemäß einer dritten beispielhaften Ausführungsform;
- Fig. 6: ein schematisch dargestelltes Unterbodenelement mit einem integrierten Sensordraht und einer integrierten Steckereinheit.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

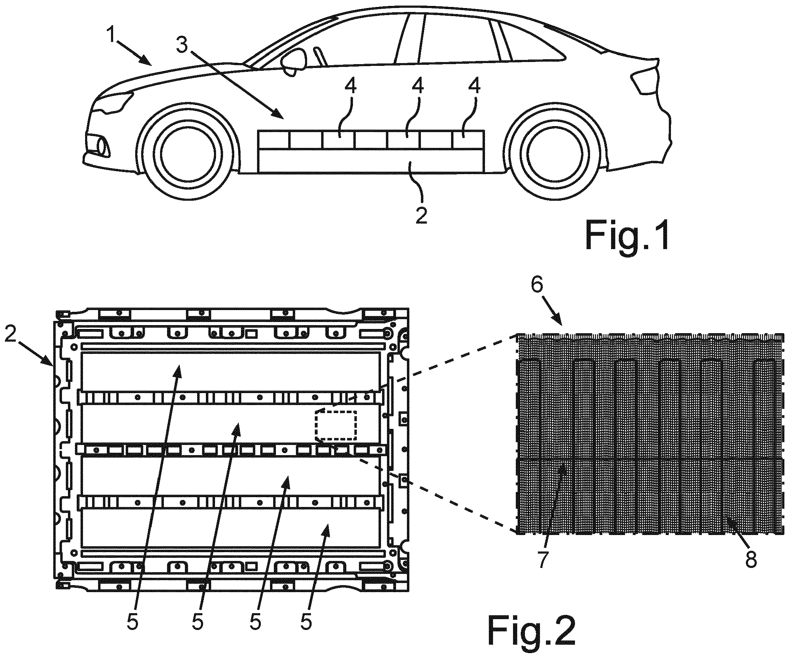

In Fig. 1 ist ein schematisiertes Kraftfahrzeug 1 mit einem Unterbodenelement 2 gemäß einer beispielhaften Ausführungsform dargestellt. Das Kraftfahrzeug 1 kann beispielsweise ein Personenkraftwagen sein, der elektrisch betrieben wird. Zur Energieversorgung kann das Kraftfahrzeug 1 eine Traktionsbatterie 3 beziehungsweise Antriebsbatterie umfassen, wobei die Traktionsbatterie 3 mehrere Batteriezellen 4 aufweisen kann.

Zum Schutz der Traktionsbatterie 3 und der jeweiligen Batteriezellen 4 vor Stößen von unterhalb des Kraftfahrzeugs 1 kann das Unterbodenelement 2, das als Unterfahrschutz ausgebildet sein kann, unterhalb des Anbringungsorts der Traktionsbatterie 3 angeordnet sein. Vorzugsweise kann das Unterbodenelement 2 dazu ausgebildet sein, die Traktionsbatterie 3 vor mechanischen Einflüssen zu schützen. Dennoch kann es vorkommen, dass aufgrund eines starken Stoßes von unterhalb des Kraftfahrzeugs 1, beispielsweise bei einem Aufsetzen einer Pollerüberfahrt, zu einer Intrusion der Traktionsbatterie 3 kommt. Um das festzustellen und einen Fahrer des Kraftfahrzeugs 1 vor einer Beschädigung der Traktionsbatterie 3 zu warnen, kann daher vorgesehen sein, ein Sensierungskonzept für die Traktionsbatterie 3 bereitzustellen.

In Fig. 2 ist das Unterbodenelement 2 des Kraftfahrzeugs 1 schematisch in einer Draufsicht aus Richtung der Traktionsbatterie 3 dargestellt, wobei die Traktionsbatterie 3 in dieser Fig. nicht dargestellt ist. Das Unterbodenelement 2 kann mehrere Kammern 5 aufweisen, die als flächige Bereiche ausgebildet sind, wobei in die Kammern 5 die Batteriezellen 4 der Traktionsbatterie 3 angeordnet werden können. Um Stöße auf die Traktionsbatterie 3 und die jeweiligen Batteriezellen 4 feststellen zu können, kann eine Sensorvorrichtung 6 bereitgestellt sein, die beispielsweise in jeder der Kammern 5 flächig angeordnet ist. In dieser Fig. ist nur ein Ausschnitt der Sensorvorrichtung 6 gezeigt, wobei die Sensorvorrichtung 6 vorzugsweise auf eine gesamte Fläche der Kammern 5 angeordnet werden kann. Die Sensorvorrichtung 6 kann dazu ausgebildet sein, eine Verformung des Unterbodenelements 2 und damit eine Intrusion auf die Traktionsbatterie 3 festzustellen. Die Anordnung der Sensorvorrichtung 6 in der jeweiligen Kammer hat den Vorteil, dass eine Detektion einer Verformung der jeweiligen Kammer 5 ermöglicht wird und somit eine Lokalisierung, an welcher Batteriezelle 4 ein Schaden entstanden ist.

Die Sensorvorrichtung 6 kann ein flächiges Textilmaterial 7 aufweisen, in das ein Sensordraht 8 integriert ist. Das Textilmaterial 7, das auch als flächiges textiles Halbzeug bezeichnet werden kann, kann eine Anbringung des Sensordrahtes 8 in dem Unterbodenelement 2, insbesondere in den Kammern 5, erleichtern. Der Sensordraht 8 kann beispielsweise aus einer Karbonfaser ausgebildet sein, die besonders leicht in das Textilmaterial 7 eingearbeitet werden kann und geeignete Bruch- und Dehnungseingeschaften aufweist. Des Weiteren ist der Sensordraht 8 vorzugsweise mäanderförmig in das Textilmaterial 7 eingearbeitet, sodass ein guter Kompromiss zwischen einer Materialeinsparung und einer Abdeckung einer Fläche zur Detektion bereitgestellt werden kann.

Zur Detektion einer Verformung kann vorgesehen sein, dass durch den Sensordraht 8 ein Strom, insbesondere mit einer vorgegebenen Spannung, von der Sensorvorrichtung 6 gemessen wird, wobei in Abhängigkeit einer Änderung der Spannung eine Verformung des Sensordrahts 8 festgestellt werden kann. Hierzu kann der Sensordraht 8 dazu ausgebildet sein, bei Verformung einen elektrischen Widerstand zu ändern, indem beispielsweise eine Länge und/oder ein Durchmesser des Sensordrahts bei der Verformung verändert wird, was zu einer messbaren Widerstandsänderung führt. Wird der Sensordraht 8 zu stark und über eine definierte Durchbiegung hinaus verbogen, kann beispielsweise vorgesehen sein, dass eine gemessene Änderung der Spannung über einem vorgegebenen Spannungsschwellenwert liegt und ein Fahrer des Kraftfahrzeugs 1 kann daraufhin ein Warnsignal erhalten, das von der Sensorvorrichtung 6 in dem Fall der Übersteigung des Spannungsschwellenwerts erzeugt wird. Somit kann auf einfache Art eine Verformung des Unterbodenelements 2 und folglich eine Intrusion auf die Traktionsbatterie 3 beziehungsweise einer der Batteriezellen 4 festgestellt werden.

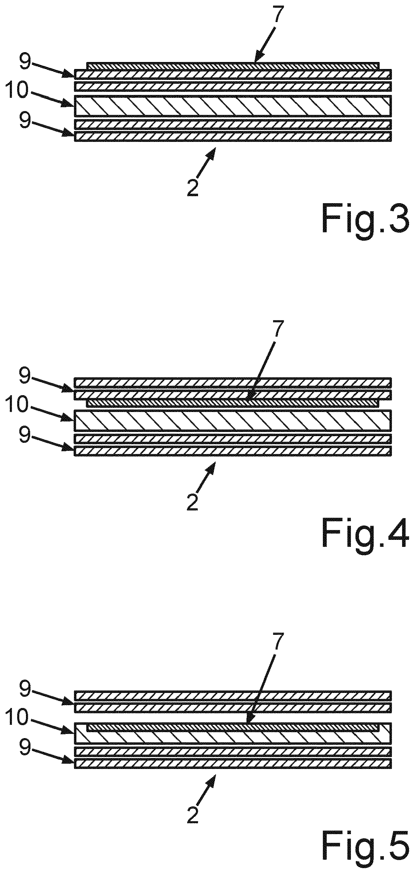

In den Fig. 3 bis 5 sind bevorzugte Applikationsorte für den im Textilmaterial integrierten Sensordraht dargestellt. In Fig. 3 ist eine erste beispielhafte Ausführungsform gezeigt, in der das Textilmaterial mit dem Sensordraht an einer Oberfläche des Unterbodenelements 2 angeordnet ist, wobei die Oberfläche in Richtung es Kraftfahrzeugs angeordnet ist. Das heißt, auf der Innenseite des Unterbodenelements 2 in Richtung der Traktionsbatterie 3. Hierbei kann das textile Halbzeug (Textilmaterial 7) mit dem Sensordraht 8 nachträglich auf die Innenseite des fertigen Unterbodenelements 2 aufgebracht, zum Beispiel aufgeklebt, werden. Hierzu kann das Textilmaterial 7 in einem vorgelagerten Fertigungsschritt beispielsweise mit Harz injiziert werden, um daraus eine dünne Platte zu erzeugen, die auf die Oberfläche des Unterbodenelements 2 aufklebbar ist. Das Unterbodenelement 2 selber kann hierbei mit mehreren Lagen ausgebildet sein, insbesondere mit zwei Deckschichten 9 und einem Schaumeinleger 10 als biegesteife Zwischenschicht zwischen den beiden Deckschichten 9.

In Fig. 4 ist ein zweiter beispielhafter Applikationsort für das Textilmaterial 7 mit dem Sensordraht 8 in dem Unterbodenelement 2 gezeigt. In diesem Ausführungsbeispiel kann das Textilmaterial 7 mit dem Sensordraht 8 beispielsweise direkt in das Unterbodenelement 2 integriert sein, indem beispielsweise in einem Nassprozess das Textilmaterial 7 zwischen den Schaumeinleger 10 und einer der Deckschichten 9 eingelegt wird. Vorzugsweise kann das Textilmaterial 7 zwischen den Schaumeinleger 10 und der oberen Deckschicht 9 eingelegt werden. Die Deckschicht 9 kann beispielsweise als Glaslage beziehungsweise Glasfaserkern/Glasfasergewebe vorliegen und eine Stabilität des Unterbodenelements 2 bereitstellen.

In Fig. 5 ist ein dritter beispielhafter Applikationsort für das Textilmaterial 7 mit dem Sensordraht 8 dargestellt. In diesem Ausführungsbeispiel kann das Textilmaterial 7 direkt in einen vorgefertigten Schaumeinleger 10 des Unterbodenelements 2 eingeschäumt sein. Das heißt, das flächige Textilmaterial 7 befindet sich in dem Schaumeinleger 10, der von den zwei Deckschichten 9 umschlossen ist.

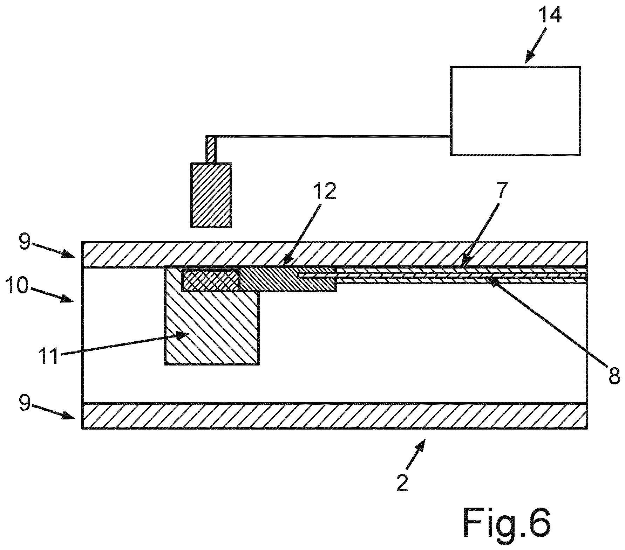

In Fig. 6 ist ein Unterbodenelement 2 mit einer Steckerintegration für den dritten beispielhaften Applikationsort gezeigt, in dem das Textilmaterial 7 mit dem Sensordraht 8 in den Schaumeinleger 10 integriert ist. Um den Sensordraht 8 zu kontaktieren und ein Signal abzugreifen, insbesondere um die am Sensordraht 8 anliegende Spannung zu messen, kann bei einem Herstellungsprozess zusätzlich zu dem Textilmaterial 7 auch eine Steckereinheit 11 in dem Schaumeinleger 10 eingeschäumt sein. Vorzugsweise kann der Sensordraht 8 mit der Steckereinheit 11 verbunden sein, entweder direkt oder über ein Metallplättchen 12, wobei durch das Metallplättchen 12 ein Fertigungsprozess erleichtert werden kann, insbesondere aufgrund einer leichteren Verbindung des Metallplättchens 12 mit dem Sensordraht 8. Beispielsweise kann ein Ende des Sensordrahts 8 mit dem Metallplättchen 12 fixiert werden, insbesondere durch lokale Klebung auf dem Metallplättchen 12, wobei das Metallplättchen 12 mit der Steckereinheit 11 elektrisch gekoppelt sein kann.

Um die Steckereinheit 11 von außen zu erreichen, kann in dem Fertigungsprozess eine Öffnung durch zumindest eine der Deckschichten 9 und den Schaumeinleger 10 bis zu der Steckereinheit 11 freigestellt werden, über die die Steckereinheit 11 mittels eines Steckers 13 zu einer Auswerteeinheit 14 der Sensorvorrichtung 6 koppelbar ist. Mit anderen Worten kann der Zugang zur Steckereinheit 11 durch eine exakte Positionierung der Steckereinheit 11 nachträglich freigestellt werden, zum Beispiel indem nachträglich ein Loch durch die Deckschicht 9 gebohrt wird. Eine weitere Steckereinheit, die hier nicht gezeigt ist, kann ein anderes Ende des Sensordrahts 8 mit einem weiteren Stecker verbinden, der zu der Auswerteeinheit 14 führt. Somit kann eine kostengünstige, einfache und reproduzierbare Kontaktierung der Drahtenden bereitgestellt werden, um Signale abgreifen zu können.

Insgesamt zeigen die Beispiele, wie durch die Erfindung über eine Widerstandssensierung im Unterbodenelement 2 ein Sensierungskonzept für eine Traktionsbatterie 3 bereitgestellt werden kann, indem eine Detektion einer Verformung des Unterbodenelements 2 Rückschlüsse auf eine Intrusion von Batteriezellen 4 zulassen.

## Patentansprüche

1. Unterbodenelement (2) für eine Traktionsbatterie (3) eines Kraftfahrzeugs (1), umfassend zumindest eine Sensorvorrichtung (6),
**dadurch gekennzeichnet, dass**
die Sensorvorrichtung (6) zumindest einen elektrisch leitfähigen Sensordraht (8) aufweist, der in ein flächiges Textilmaterial (7) integriert ist, wobei die Sensorvorrichtung (6) dazu ausgebildet ist, eine am Sensordraht (8) anliegende Spannung zu messen und in Abhängigkeit einer gemessenen Änderung der Spannung eine Verformung des Sensordrahts (8) festzustellen.

2. Unterbodenelement (2) nach Anspruch 1, wobei der Sensordraht (8) mäanderförmig in dem flächigen Textilmaterial (7) integriert ist.

3. Unterbodenelement (2) nach einem der vorhergehenden Ansprüche, wobei der Sensordraht (8) aus einer Karbonfaser oder einem mit Metall beschichteten Kunststofffilament ausgebildet ist.

4. Unterbodenelement (2) nach einem der vorhergehenden Ansprüche, wobei der Sensordraht (8) dazu ausgebildet ist, bei einer Verformung einen elektrischen Widerstand zu ändern.

5. Unterbodenelement (2) nach einem der vorhergehenden Ansprüche, wobei die Sensorvorrichtung (6) dazu ausgebildet ist, ein Warnsignal zu erzeugen, falls die gemessene Änderung der Spannung über einem vorgegebenen Spannungsschwellenwert liegt.

6. Unterbodenelement (2) nach einem der vorhergehenden Ansprüche, wobei das flächige Textilmaterial (7) mit dem Sensordraht (8) bei einem bestimmungsgemäßen Einbau des Unterbodenelements (2) an einer Oberfläche des Unterbodenelements (2) in Richtung des Kraftfahrzeugs (1) angeordnet ist.

7. Unterbodenelement (2) nach einem der Ansprüche 1 bis 5, wobei das Unterbodenelement (2) einen Schaumeinleger (10) als biegesteife Zwischenschicht zwischen zumindest zwei Deckschichten (9) aufweist, wobei das flächige Textilmaterial (7) mit dem Sensordraht (8) zwischen den Schaumeinleger (10) und einer der beiden Deckschichten (9) angeordnet ist.

8. Unterbodenelement (2) nach einem der Ansprüche 1 bis 5, wobei das Unterbodenelement (2) einen Schaumeinleger (10) als biegesteife Zwischenschicht zwischen zumindest zwei Deckschichten (9) aufweist, wobei das flächige Textilmaterial (7) mit dem Sensordraht (8) in dem Schaumeinleger (10) integriert ist.

9. Unterbodenelement (2) nach Anspruch 8, wobei ein jeweiliges Ende des Sensordrahtes (8) mit einer in den Schaumeinleger (10) integrierten Steckereinheit (11) verbunden ist, wobei die Steckereinheit (11) über eine freigestellte Öffnung durch zumindest eine der Deckschichten (9) und der Zwischenschicht (10) mittels eines Steckers (13) zu einer Auswerteeinheit (14) der Sensorvorrichtung (6) koppelbar ist.

10. Kraftfahrzeug (1) mit einem Unterbodenelement (2) nach einem der vorhergehenden Ansprüche.

11. Kraftfahrzeug (1) nach Anspruch 10, wobei das Kraftfahrzeug (1) eine Traktionsbatterie (3) aufweist und das Unterbodenelement (2) mehrere Kammern (5) zur Anordnung von Batteriezellen (4) der Traktionsbatterie (3) umfasst, wobei das Textilmaterial (7) mit dem Sensordraht (8) flächig in den Bereichen der Kammern (5) auf oder in dem Unterbodenelement (2) angeordnet ist.

12. Verfahren zur Feststellung einer Intrusion einer Traktionsbatterie (3) eines Kraftfahrzeugs (1), mit einem Unterbodenelement (2) nach einem der Ansprüche 1 bis 9, wobei durch eine Sensorvorrichtung (6) des Unterbodenelements (2), die zumindest einen elektrisch leitfähigen Sensordraht (8), der in ein flächiges Textilmaterial (7) integriert ist, aufweist, eine am Sensordraht (8) anliegende Spannung gemessen wird und in Abhängigkeit einer gemessenen Änderung der Spannung eine Verformung des Sensordrahts (8) und damit eine Intrusion der Traktionsbatterie (3) festgestellt wird.

## Claims

1. Underbody element (2) for a traction battery (3) of a motor vehicle (1), comprising at least one sensor device (6),
**characterized in that**
the sensor device (6) comprises at least one electrically conductive sensor wire (8), which is integrated into a laminar textile material (7), wherein the sensor device (6) is configured to measure a voltage applied to the sensor wire (8) and to determine a deformation of the sensor wire (8) in dependence on a measured change of the voltage.

2. Underbody element (2) according to claim 1, wherein the sensor wire (8) is integrated in meandering form into the laminar textile material (7).

3. Underbody element (2) according to any one of the preceding claims, wherein the sensor wire (8) is formed of a carbon fiber or a metal-coated plastic filament.

4. Underbody element (2) according to any one of the preceding claims, wherein the sensor wire (8) is configured to change an electric resistance in case of a deformation.

5. Underbody element (2) according to any one of the preceding claims, wherein the sensor device (6) is configured to generate a warning signal in case the measured change of the voltage is above a predetermined voltage threshold value.

6. Underbody element (2) according to any one of the preceding claims, wherein the laminar textile material (7) with the sensor wire (8) is arranged on a surface of the underbody element (2) in the direction of the motor vehicle (1) when the underbody element (2) is installed according to the intended purpose.

7. Underbody element (2) according to any one of claims 1 to 5, wherein the underbody element (2) comprises a foam inlay (10) as bending-resistant intermediate layer between at least two cover layers (9), wherein the laminar textile material (7) with the sensor wire (8) is arranged between the foam inlay (10) and one of the two cover layers (9).

8. Underbody element (2) according to any one of claims 1 to 5, wherein the underbody element (2) comprises a foam inlay (10) as bending-resistant intermediate layer between at least two cover layers (9), wherein the laminar textile material (7) with the sensor wire (8) is integrated into the foam inlay (10).

9. Underbody element (2) according to claim 8, wherein a respective end of the sensor wire (8) is connected to a plug unit (11) that is integrated into the foam inlay (10), wherein the plug unit (11) is capable of being coupled via an exposed opening through at least one of the cover layers (9) and the intermediate layer (10) by a plug (13) into an evaluation unit (14) of the sensor device (6).

10. Motor vehicle (1) comprising an underbody element (2) according to any one of the preceding claims.

11. Motor vehicle (1) according to claim 10, wherein the motor vehicle (1) comprises a traction battery (3) and the underbody element (2) comprises several chambers (5) for the arrangement of battery cells (4) of the traction battery (3), wherein the textile material (7) with the sensor wire (8) is arranged in a laminar way in the regions of the chambers (5) on or in the underbody element (2).

12. Method for determination of an intrusion into a traction battery (3) of a motor vehicle (1), comprising an underbody element (2) according to any one of claims 1 to 9, wherein by a sensor device (6) of the underbody element (2) comprising the at least one electrically conductive sensor wire (8), which is integrated into a laminar textile material (7), a voltage applied to the sensor wire (8) is measured and in dependence on a measured change of the voltage a deformation of the sensor wire (8) and thus an intrusion into the traction battery (3) is determined.

## Revendications

1. Élément de dessous de caisse (2) pour une batterie de traction (3) d'un véhicule à moteur (1), comprenant au moins un dispositif à capteur (6),
**caractérisé en ce que**
le dispositif à capteur (6) comporte au moins un fil de capteur (8) électriquement conducteur qui est intégré dans une matière textile en feuille (7), le dispositif à capteur (6) étant configuré pour mesurer une tension appliquée au fil de capteur (8) et pour déterminer une déformation du fil de capteur (8) en fonction d'une variation mesurée de la tension.

2. Élément de dessous de caisse (2) selon la revendication 1, dans lequel le fil de capteur (8) est intégré dans la matière textile en feuille (7) sous forme de méandres.

3. Élément de dessous de caisse (2) selon l'une des revendications précédentes, dans lequel le fil de capteur (8) est formé d'une fibre de carbone ou d'un filament de matière plastique revêtu de métal.

4. Élément de dessous de caisse (2) selon l'une des revendications précédentes, dans lequel le fil de capteur (8) est configuré pour faire varier une résistance électrique en cas de déformation du fil de capteur.

5. Élément de dessous de caisse (2) selon l'une des revendications précédentes, dans lequel le dispositif à capteur (6) est conçu pour générer un signal d'avertissement si la variation mesurée de la tension est supérieure à une valeur de seuil de tension prédéterminée.

6. Élément de dessous de caisse (2) selon l'une des revendications précédentes, dans lequel la matière textile en feuille (7) avec le fil de capteur (8) est agencée sur une surface de l'élément de dessous de caisse (2) en direction du véhicule à moteur (1), lorsque l'élément de dessous de caisse (2) est correctement installé.

7. Élément de dessous de caisse (2) selon l'une des revendications 1 à 5, dans lequel l'élément de dessous de caisse (2) comporte un insert en mousse (10) faisant office de couche intermédiaire résistant à la flexion entre au moins deux couches de recouvrement (9), la matière textile en feuille (7) avec le fil de capteur (8) étant agencée entre l'insert en mousse (10) et l'une des deux couches de recouvrement (9).

8. Élément de dessous de caisse (2) selon l'une des revendications 1 à 5, dans lequel l'élément de dessous de caisse (2) comporte un insert en mousse (10) faisant office de couche intermédiaire résistant à la flexion entre au moins deux couches de recouvrement (9), la matière textile en feuille (7) avec le fil de capteur (8) étant intégrée dans l'insert en mousse (10).

9. Élément de dessous de caisse (2) selon la revendication 8, dans lequel une extrémité respective du fil de capteur (8) est reliée à une unité à fiche (11) intégrée dans l'insert en mousse (10), l'unité à fiche (11) pouvant être couplée au moyen d'une fiche (13) à une unité d'évaluation (14) du dispositif à capteur (6), par l'intermédiaire d'une ouverture exposée à travers au moins une des couches de recouvrement (9) et la couche intermédiaire (10).

10. Véhicule à moteur (1) ayant un élément de dessous de caisse (2) selon l'une des revendications précédentes.

11. Véhicule à moteur (1) selon la revendication 10, dans lequel le véhicule à moteur (1) comporte une batterie de traction (3) et l'élément de dessous de caisse (2) comprend plusieurs chambres (5) pour l'agencement d'éléments de batterie (4) de la batterie de traction (3), la matière textile (7) avec le fil de capteur (8) étant agencée à plat dans les zones des chambres (5) sur ou dans l'élément de dessous de caisse (2).

12. Procédé pour déterminer une intrusion dans une batterie de traction (3) d'un véhicule à moteur (1) ayant un élément de dessous de caisse (2) selon l'une des revendications 1 à 9, dans lequel un dispositif à capteur (6) de l'élément de dessous de caisse (2) comportant au moins un fil de capteur (8) électriquement conducteur qui est intégré dans une matière textile en feuille (3), permet de mesurer une tension appliquée au fil de capteur (8) et de déterminer une déformation du fil de capteur (8), et ainsi une intrusion dans la batterie de traction (3), en fonction d'une variation mesurée de la tension.
